# EUROPEAN PATENT SPECIFICATION

(11) **EP 4 275 509 B1**
(45) Date of publication and mention of the grant of the patent: **17.12.2025**
(21) Application number: 22020221.2
(22) Date of filing: 12.05.2022
(51) Int. Cl.: A23G 9/08, A23G 9/16, A23G 9/22, A23G 9/28, F25C 1/045, F25C 1/08, F25C 1/12, F25C 1/25

(54) **SYSTEM FOR PRODUCING FLAVOURED ICE, WITH AUTOMATIC DOSING AND WASHING MEANS**
SYSTEM ZUM PRODUZIEREN AROMATISIERTER EISPRODUKTE MIT AUTOMATISCHER DOSIER- UND WASCHEINRICHTUNG
SYSTÈME DE PRODUCTION DE GLACE AROMATISÉE, AVEC DES MOYENS DE LAVAGE ET DE DOSAGE AUTOMATIQUES

(43) Date of publication of application: 15.11.2023
(73) Proprietor: CASTEL MAC S.R.L., 31033 Castelfranco Veneto (TV) (IT)
(72) Inventor: FAVERO, Chiara, 30032 FLESSO D'ARTICO (VE) (IT); DALLA TOR, Paolo, 30020 MARCON (VE) (IT)
(74) Representative: Spagnolo, Chiara

(56) References cited:
- US-A- 6 101 833
- US-A1- 2008 041 070
- US-B1- 6 513 337

## Description

The present invention is defined in the appended claims and relates to a system for producing flavoured ice, with automatic dosing and washing means-

### Field of application

The invention refers to the industrial sector of refrigerating machines for the production of ice conventionally, called producers or makers of ice, or ice makers.

In principle, a modern ice maker is a refrigerating apparatus with a refrigerant circuit, with at least a compressor, a condensing unit and an evaporator, which allows to produce ice in different quantities and shapes by means of direct contact of water with the cold surface of the evaporator. To this aim, in apparatuses of professional type with high production speed, said evaporator surface has a temperature equal to about -15°C. The detachment of the pieces of ice already formed takes place by introducing hot gas into the same evaporator, like a rapid defrosting cycle; alternatively, it takes place by mechanical removal, or by combining the two solutions. It is thus noted that the evaporator in these machines is extremely important as it allows the formation of ice in a cold phase and it also allows its detachment in a hot phase.

From a constructive and functional point of view, an ice maker is a complex apparatus configured each time depending on the specific use and the conformation of the ice to be made. Generally, it has a box-like cabinet shape, like a small refrigerator for domestic use, where the pieces of ice are formed and collected therein in a removable container or an integrated cell, like an internal storage. Alternatively, the pieces of ice are expelled to be collected outside or directly used; therefore, not all ice makers integrate an internal storage. In the cases where said storage is included, there are sensor means which detect the reaching of a predefined level of saturation, so as to temporarily stop the production of ice, to automatically resume it after its emptying.

The final conformation of the pieces of ice obtained is mainly determined by the conformation of the evaporator in combination with a particular production method. For example, it is possible to produce ice by vertical water fall on a cell-shaped evaporator, in order to form solid modular elements such as small cubes, or by direct immersion of peduncles to form hollow elements. Alternatively, it is possible to produce ice by spraying the water from the bottom upwards, the evaporator being provided with recesses suitable for emptying by gravity. It is then possible to produce granular ice by grinding, or also flake ice by breaking a sheet of ice in continuous formation. Other conformations are possible and easily obtainable, as in the case of small ice cylinders of the type called nugget. It is thus noted that each type of ice involves a particular production method and specific means to implement it, which are each time integrated into a refrigerating apparatus with refrigerant circuit where the compressor and the condensing unit are of the conventional type while the evaporator is particularly shaped depending on the ice to be produced. By way of mere example, reference is made to the popular ice makers commercially called Icematic - www.icematic.eu.

In such apparatuses, the cold surface of the evaporator is thus the main means for ice formation, by direct contact with water. Generally, said evaporator is made of a metallic material and has a surface roughness under the microscope such as to allow the accumulation of moulds, bacteria or limestone. This problem is well known; indeed, in professional practice the operator must frequently and carefully clean said surface in order to prevent contamination by mould or bacteria, and also to avoid the known problems of degradation caused by limestone on the efficiency of the components and on the finished product. Some advanced solutions have been recently proposed for coating surfaces which contact water in an ice maker, suitable for reducing the abovementioned problems; for example, reference is made to the advantageous protective coating of ITUB20155229A1 (Spinetti), which significantly reduces said surface roughness and is made with glass-based or silicon or ceramic oxide-based materials.

Each ice maker is provided with a logic control unit with programs to manage the functioning of the entire apparatus, depending on the type of ice to be obtained and on the specific means to obtain it, also combining the action of electronic devices and electromechanical components. In this regard, mention is made of the frequent case of sensors suitable for detecting the various functioning parameters, which are combined with pumps and/or atomizers to move the water on the evaporator. In principle, a modern ice maker can thus work continuously and independently, with a good degree of reliability, until the operator turns off the apparatus or puts it on pause; alternatively, the production can be interrupted when any sensor detects an anomaly or when said storage is saturated.

Nowadays, said ice makers are increasingly used in bars, restaurants, hotels and in any place where refreshing beverages, cocktails or spirits are served; ice is also useful for maintaining the temperature low of wines served in bottles. In summer, makers of crushed ice or of ice of the nugget type are widely used for the preparation of slushes. Furthermore, ice makers are needed in the food storage and transport sector; moreover, it is known that crushed or flake ice improves the perception of freshness by the customer, as happens for example in the case of retail sale of fish, vegetables, fruit or dairy products. The abovementioned ice makers are thus widely used in the catering sector and in many professional activities; furthermore, there has recently been a significant demand for such apparatuses, suitably adapted, also for private residential use. Indeed, the immediate and prolonged benefit ice offers in refreshing a beverage in an immediate and prolonged way is well known, and it is thus desirable to have it in large quantities not only in bars but also at home in order to effectively counteract the excessive heat caused by summer higher temperatures and for other uses.

Finally, the introduction is also known of fruit juices or other flavourings in the preparation of ice elements to be sucked, as for example happens in the well-known walking format, also known as ice lolly. There has also been an increasing demand on the market for variously flavoured ice available in large quantities in the abovementioned configurations in smallsized elements, for beverages and for all the other uses described above; for example, there is a demand for flavoured ice in solid or hollow cubes, or granular or also flake ice. However, it is well known that the widespread production of ice in small elements by means of a modern automatic apparatus, such as the abovementioned ice makers, is particularly delicate from a hygienic point of view, even if only water from the water supply network is used. It has been experimentally found that the abovementioned hygienic-sanitary problem is even more relevant when water combined with fruit juices or any other flavouring substance is introduced into the refrigerating apparatus, the final product being food in all respects. In addition, there are difficulties in obtaining with repeatability the desired flavouring in the pieces of ice obtained.

The present invention proposes an innovative system for producing flavoured ice which allows the concentration of flavouring substances to be dosed with extreme precision and ease of use, and it is also safe from a hygienic-sanitary point of view.

### State of the art

In order to determine the state of the art related to the proposed solution, a conventional verification has been carried out in patent literature, examining public archives, which has led to the identification of some prior art documents, among which the following:
**D1** US2017042181 (Fiaschi)
**D2** US9038410 (Erbs et al.)
**D3** US6672097 (Ashley)
**D4** US2008/041070 (Johnson et al.)

**D1** describes an apparatus for producing flavoured ice cubes, with a tank containing one or more ready beverages which is connected in fluid continuity to a pressurized supply line; a floating-type sensor means detects the quantity of available beverage. After receiving the beverage, means for producing ice make flavoured cubes in the taste of the beverage itself, then storing them in an internal storage.

**D2** proposes a system for continuously producing pieces of flavoured ice starting from a premixed liquid which is obtained in a duct where the incoming water is directly combined with a flavouring liquid substance, such as a coffee extract, by means of a mixing valve. The system is for a machine suitable for producing ice which comprises a refrigerated container, acting as an internal storage, including a central control, two refrigerating systems, means for pumping said premixed liquid to a closed tank located in the proximity of the ice production means.

**D3** describes a system for obtaining flavoured ice from a refrigerating and freezing apparatus for food combined with an ice maker, where one or more cartridges containing a defined quantity of a flavoured fluid is inserted in fluid continuity with water, coming from the water supply network, so as to continuously form a flavoured mixture inside the duct which is directly transferred to the ice production means which are located in the proximity of a front dispenser provided with controls. The flavouring of a cartridge is directly introduced into the water duct; alternatively, in the case of multiple cartridges, a multi-channel water diversion system is integrated with a bypass valve which diverts the flow and then it rejoins in a common duct together with the content of the only cartridge chosen. D4 proposes an ice cube machine that generates ice cubes having an alcohol content of at least 2-5% and that operates at temperatures of no greater than 0° F; an ice dispensing system monitors the amount of ice cubes dispensed from the machine and can determine the amount of alcohol dispensed from the system.

### Drawbacks

A first disadvantage encountered in known and conventional systems and apparatuses for producing flavoured ice, referred to for example in D1, D2 or D3, concerns the fact that they do not allow a flavouring substance to be dosed with adequate precision. For example, in D1 ready-made beverages or liquids already flavoured are used; in D2 and D3, the flavouring substances are instead chosen each time by the user and directly joined to the water in a common duct, with a mixing valve. It can happen, however, that the amount of flavouring actually present in the ice does not correspond to the desired one, the mixing of the two fluids within a water duct being sometimes inhomogeneous and/or imprecise. It has been also found that the concentration of the chosen flavouring may not be constant throughout the entire production cycle; basically, the known solutions do not guarantee a sufficient repeatability of the result in each piece of ice produced with the same flavouring. For example, the problems are well known of poor or excessive concentration of a flavouring, compared to the expected result, immediately after a flavouring change or in prolonged production cycles; in practice, this problem is particularly frequent in the case of flavouring substances of natural origin and inhomogeneous when they are introduced into the water in mixture or suspension.

A second disadvantage, related to the abovementioned first disadvantage, concerns the means conventionally provided for dosing the flavouring substance: in particular, advanced dosing systems are not known which comprise combined dispensing and detection means so as to adequately consider the characteristics of each individual flavouring substance and the actual result obtained in the dosage. Furthermore, dosing systems are not known capable of independently modifying the dispensing of a flavouring substance depending on the detections performed by different sensor means combined with each other.

A third disadvantage encountered in the known systems and apparatuses for producing flavoured food ice concerns the risk of contamination due to residual deposits of the flavouring substances. In particular, the problems of bacterial contamination are known and dangerous in the case of flavourings of natural and/or organic origin, such as for example fruit juices. In addition, the problems of contamination between different flavourings are also known and unwelcome, as generally happens with every change of flavouring when using common ducts. For these reasons frequent washing is involved; however, it has been found that the necessary washing is carried out manually and occasionally by the individual operator, with a high risk of occasional and/or poorly effective interventions from a hygienic-sanitary point of view. Conventional solutions of integrated type have limited action on internal piping or accessory components. In particular, there are no automatic washing means integrated into the apparatus and in the production cycles which act on the evaporator, in correspondence with the surfaces which contact the flavoured ice, so as to make the production of food ice safe, avoiding any contamination.

A fourth problem, also arising from the lack of effective automatic washing of the evaporator, concerns the natural deposit of limestone on the surfaces contacting the aqueous mixture suitable for producing ice. It has indeed been found that on these surfaces both the residual deposits of the flavouring substances and the limestone deposits gradually accumulate, like stratifications, with the combined effect of hindering the detachment of the pieces of ice and significantly reducing the efficiency of the production system, and also of reducing the duration of the components involved as well as altering the flavouring for ice produced.

Considering these aspects and other disadvantages which can be encountered in the known and conventional solutions, the need is absolutely evident for the sector to identify technical solutions for producing flavoured ice which are more effective in dosing the individual flavourings, safer from the hygienic-sanitary point of view, and also easier to use for professional purposes.

### Brief description

The present invention is defined in the appended claims and relates to a system (10) for safely producing flavoured ice, where multiple flavourings (104) are dosed with precision and repeatability on single dosage lines (103, 105a - 105n, 106) and introduced into a mixing tank (107) together with water, with independent ducts, obtaining a flavoured mixture (108) which is then conducted to an evaporator with a protective and smoothing layer (102, 132). Automatic dosing means are provided which are connected to the central logic unit comprising a management algorithm (100, 133), with parameters which can be modified manually or automatically, like a self-adjustment, by means of multiple dosing means combined with each other, with adjusting members (109, 110, 113) combined with sensor means (116, 117, 118, 119, 120). Furthermore, the system (10) has automatic and integrated washing means, controlled by a washing algorithm (100, 134), for executing rinsing and/or washing with detergents.

### Aims and advantages

A first aim of the invention was to produce flavoured ice, with different shapes according to production needs, where every single flavouring is dosed with extreme precision and repeatability so that the taste of each piece of ice produced is exactly the desired one. To this aim, an improved dosing system is provided which combines multiple sensor means and dispensing control members, combined with specific programs which act as parameterizable management algorithms, which are included in the central logic unit of an ice production apparatus to ensure each time the correct dosage of flavourings and the best insertion times. Basically, the proposed system allows the exact quantity of a selected or pre-selected flavouring, of any nature or consistency, to be introduced into the liquid which generates the ice, based on detections executed autonomously during dosage, like a self-adjustment of the concentration of a flavouring, or also manually when the surrounding conditions vary. By way of mere example, if it is noticed that the taste of the water introduced has changed during the production cycles and therefore the taste of the ice produced does not correspond exactly to the desired one, an operator can intervene by voluntarily increasing the dosage per cycle of the flavouring introduced or its concentration.

A second aim of the invention was to produce flavoured ice with greater safety than known and conventional solutions; in particular, the proposed system makes it possible to automatically execute periodic washing cycles suitable for removing any deposit of flavouring substances on the ice production means, such as for example the evaporator, thus ensuring a degree of safety and hygiene compatible with food use. In practice, it is intended to create an effective automatic washing system for the surfaces which contact the flavoured mixture and, at the same time, these surfaces are rendered easier to wash, as well as lasting, efficient and free of limestone.

A third aim, together with the previous one, was to reduce the roughness of the evaporator surface so as to prevent residues of flavouring substances or limestone from depositing on the evaporating surface, significantly facilitating the abovementioned washing; at the same time, the detachment of the flavoured ice from cold surfaces is facilitated, further optimizing production efficiency.

As a result of the advantages described above, it is possible to produce flavoured ice with a high repeatability and uniformity of taste, in each piece of ice produced from the same flavoured mixture, without contamination between different flavourings or variations in concentration. In addition, manual cleaning and maintenance interventions are reduced, both to ensure the healthiness of the apparatus and to extend its life and efficiency. For example, the manual washing the operator must execute periodically in known and conventional solutions to remove any deposits of flavouring substances is eliminated. Furthermore, with the proposed automatic washing system it is possible to add any sanitizing and/or descaling substance to the washing water, using the same automatic dispensing and control means provided in the dosage of the flavourings.

Another aim was to allow the user a wide choice among multiple flavourings available at the same time and also to allow the modification of the preset parameters for each flavouring and/or production method, according to production needs or personal desire, or to allow the temporary suspension of their use in order to obtain pure ice, free of flavourings or other additives. In particular, it is intended to make the dosage and dispensing lines of the individual flavourings independent, as parallel lines, so as to manage them individually with dedicated means and with a parameterizable management algorithm, where the concentrations and intervention times are preset and modifiable by the user, according to a preset sequence.

Another further aim was to uniform and optimize the containers of the various flavouring substances, so as to facilitate the storage, transport and conservation of the individual flavourings, and to insert or remove them from the production apparatus in an extremely smooth way. It is thus intended to create an integrated system where the individual flavourings can be integrated, identified and managed in an automatic and extremely efficient way, improving the dispensing for dosing purposes.

Finally, the proposed system can be easily integrated into newly constructed ice making apparatuses, or also into existing apparatuses like an improving modification, also called retrofit, where they are producers of ice of the type in use in the professional catering sector or ice makers, being provided with at least: a central logic unit, a compressor, a condensing unit and an evaporator shaped depending on the type of ice to be produced. However this aspect is not according to the present invention, which is defined in present claim 1. The proposed system allows such apparatuses to obtain flavoured ice in a safer way and with a better quality, with respect to all known and conventional solutions, according to the many advantages described above. In particular, the proposed system allows to produce flavoured ice in an automatic and extremely precise way in the dosage of the flavouring substances, to obtain with repeatability pieces of ice with a uniform taste, for each flavouring considered individually, and also safe from the hygienic-sanitary point of view. The proposed system thus improves the equipment making it extremely effective, safe and comfortable to use, yet simple from a construction point of view and easy to produce industrially, with limited overall costs.

These and other aims and advantages will be evident from the following detailed realization description with the aid of the enclosed drawings whose execution details are not to be intended as limiting but only and exclusively exemplary.

### Content of the drawings

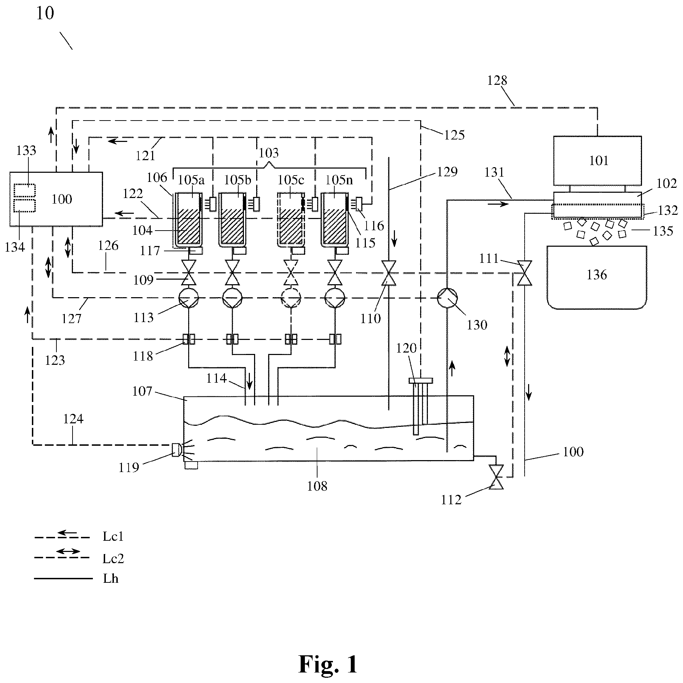

Figure 1 is a simplified scheme of the system for producing flavoured ice, according to the present invention.

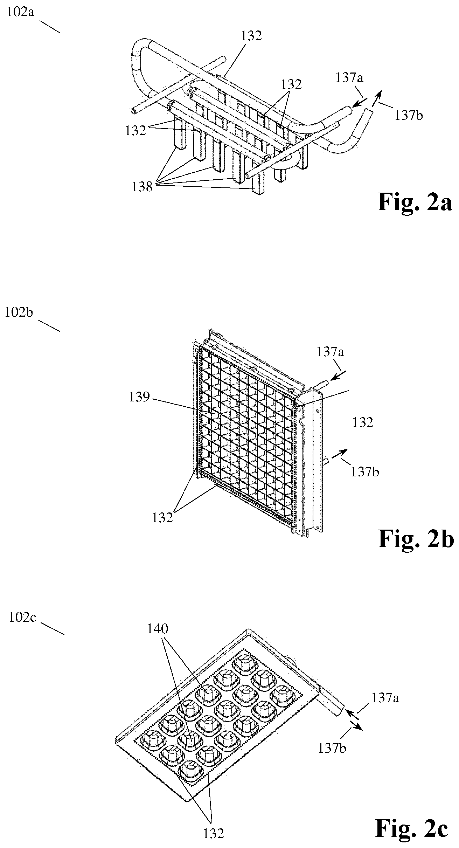

Figures **2a, 2b and 2c** represent three embodiment variants of an evaporator for producing flavoured ice, acting in accordance with the system proposed by the invention and not encompassed by the wording of the claims, being provided with a particular protective coating at least on the surfaces which form the pieces of ice for food use. For example, Fig. **2a** illustrates an evaporator with peduncles suitable for contacting the liquid mixture by immersion, obtaining pieces of hollow ice, while Fig. **2b** illustrates a hive evaporator suitable for contacting the liquid mixture by dropping from above, obtaining modular ice in cubes; Fig. **2c** instead illustrates a small-cup evaporator suitable for contacting the liquid mixture sprayed from below, obtaining pieces of solid and transparent ice by dropping. The dashed line schematically delimits the minimum area where said protective coating is to be applied, for the purposes of the invention.

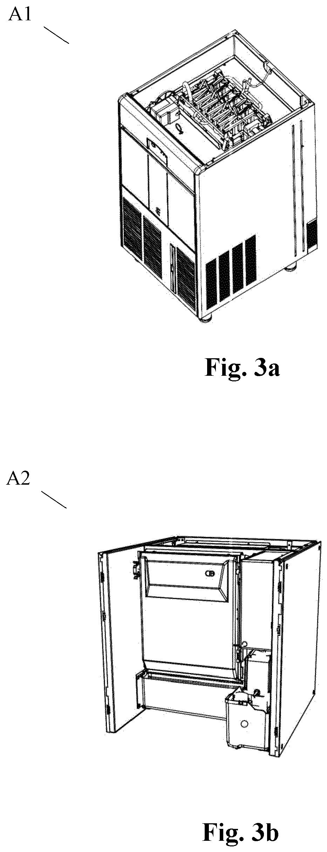

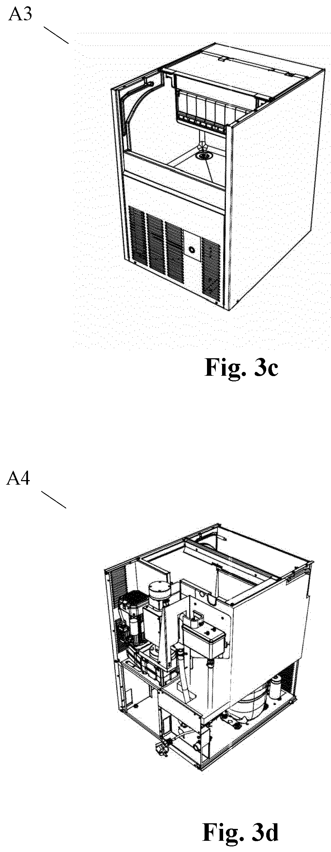

Figures **3a, 3b****,** **3c** and **3d** are three-dimensional overall view of apparatuses for producing ice acting in accordance with the system proposed by the invention and not encompassed by the wording of the claims. For example, in Fig. **3a** an apparatus can obtain by immersion pieces of hollow ice with the peduncle evaporator of Fig. **2a**; Figs. **3b****,** **3c** and **3d** are embodiment variants having a different configuration, depending on the type of ice to be produced. For example, Fig. **3b** represents an apparatus for producing modular ice, with the hive evaporator of Fig. **2b****,** and Fig. **3c** instead represents an apparatus for producing solid and transparent ice by spraying from below, with the evaporator of Fig. **2c**; Fig. **3d** represents an apparatus for producing flake ice or flaker.

### Practical execution of the invention

With reference also to the schematic figures (Figs. 1, 2a - 2c, 3), the present invention, set out in the appended set of claims, proposes an advantageous system (10) for producing flavoured ice in pieces, for food use, in the various conformations required today, such as, for example, the modular ice in cubes, hollow ice or flake ice, providing specific automatic dosing (103 - 129, 133) and washing (134) means to dose each time the selected or pre-selected flavouring (104), with extreme precision and repeatability, and also without contamination. In practice, the system (10) allows to automatically introduce the optimal quantity of a single flavouring (104) and of water to form a flavoured liquid mixture (108) so as to obtain flavoured ice (135) with the exact taste intended, throughout the production cycle. At the same time, the system (10) provides a particular protective coating which reduces the surface roughness of the evaporator, and also automatic washing means, which act in synergy to produce the abovementioned flavoured ice with extreme efficiency and food safety.

The system (10) proposed by the invention can be easily integrated into an apparatus (A1 - A4) for producing ice of the known type, such as the producers of ice or ice makers widespread in the professional field, not encompassed by the wording of the claims, being substantially a refrigerating circuit machine with a compressor, a condensing unit (101) connected to an evaporator (102), and with a central logic unit (100) which manages the functioning of all its components. In particular, said system (10, 100) controls the dosage of multiple flavourings (104) simultaneously present in the same apparatus (A1 - A4), by means of various sensor means and adjusting members combined with each other, which are individually applied to the dispensing of each flavouring like dispensing and dosage lines independent of each other (103 - 129) (Fig. 1). To this aim, each flavouring (104) is individually contained in an innovative removable cartridge (105a, 105b, 105c, 105n, 115) from which its own inlet or load duct (114) in a common mixing tank (107) originates where the water is also introduced, by means of its own load duct (110, 129) preferably derived from the water supply network; the flavoured mixture (108) thus obtained is then conducted to the evaporator, which is provided with a protective layer with a smoothing and anti-accumulation effect (102, 132).

More in detail, a calibrated dosage is executed of each individual selected flavouring. In the complete and optimal configuration (Fig. 1) the system (10) combines multiple sensor means (116 - 120) suitable for detecting an identity (116) and physical characteristics which are different from each other (117 - 120), together with active means for controlling the dispensing, also known as adjusting members (109, 100, 113), and with control lines (Lc1, Lc2) dedicated to them which are individually connected to the central logic unit (100). The latter includes particular algorithms for the management (133) and for the washing (134), with parameters which can be modified on the basis of the detections actually executed, like an automatic calibration or setting, so as to obtain continuous optimal dispensing according to the taste and concentration intended for each flavouring.

The logic unit (100) includes the management algorithm (133), for controlling the dosage of flavourings and the production of ice, with multiple control parameters individually dedicated to each flavouring (104, 105a, 105b, 105c, 105n), like a library of parameters which can be modified manually by the user or also autonomously by the system on the basis of the detections of the sensor means (116 - 120), as a self-adjustment of the dosage. Alternatively, said library of parameters is cloud-resident, being controlled and/or updated and/or downloaded via the Internet. In practice, the initially preset parameters can be modified during the production cycle depending on said detections so as to obtain the expected result even when the surrounding conditions vary, such as the quality or taste of the water; furthermore, such modifications can be incorporated into said preset library.

By way of mere example, the use is allowed of natural juices or extracts of a citrus fruit, such as orange or lemon, which are characterized by a compound of liquid and solid substances, with fibers and other substances in variable concentration, which cause a variability in taste which can be perceived in the different production phases, as sometimes happens at the start of a production cycle or after a change of flavouring, or after a washing when there is an evident drop in the concentration of flavouring on the pieces produced. In such cases, the system (10) is arranged so as to progressively compensate for the initial decrease in concentration, modifying the dispensing of the adjusting members (109, 110, 113) depending on the continuous detections carried out by the sensor means (116 - 120), like an automatic setting or calibration of the parameters for controlling the dosage (100, 133).

To this aim, in each dispensing line or duct of a single flavouring (103, 114), there are at least two types of adjusting members, in order to adapt to the nature and/or consistency of the flavouring substance to be dispensed: a liquid valve (109) and a dosing pump (113). Said sensor means are instead of at least five types and act in a differentiated and reciprocally combined way, the following being simultaneously provided:
- an automatic identification means such as a barcode (115) reader (116) or equivalent identification means, in correspondence with each cartridge (104, 105a, 105b, 105c, 105n, 106);
- a sensor means which detects a weight, such as a load cell (117) under each cartridge (104, 105a, 105b, 105c, 105n);
- a sensor means which detects a flow in a duct, such as a flow meter (118) downstream of each adjustment (104, 105a, 105b, 105c, 105n);
- a sensor means which detects the opacity of a liquid mixture, such as an opacimeter (119) in correspondence with the mixing tank (107, 108);
- a sensor means which detects a level or a residual volume in a liquid mixture, such as a level meter (120) in the mixing tank (107, 108);
- the abovementioned sensor means being also used in a combined way such as for example to detect the density of the flavoured mixture (108), correlating the abovementioned weight (117) and the abovementioned level or volume (120) to each other.

Consequently, dedicated control lines are provided where the information has a unidirectional flow (121 - 125, Lc1) from the sensor means to the logic unit (100, 133) to send the measurements to it, or from this one to the condensing unit (101, 128) to command it; dedicated control lines are then provided where the information and commands have a bidirectional flow (Lc2), between the logic unit (100, 133) and the various active adjusting members, or all the valves (109 - 112) and the dosage pumps (113, 130). Furthermore, unidirectional flow ducts (Lh) are provided, such as the ducts for load (114) and dosage of the individual flavourings, the water load duct (129) preferably derived from the water supply network, the duct for taking the flavoured mixture (108, 131) to conduct it to the evaporator (102, 132) (Fig. 1) so as to form the flavoured ice in the desired conformation (102a - 102c).

In a simplified embodiment variant, the system (10) provides simplified dosing means, with a peristaltic pump of the type with calibrated flow rate, having the control of the activation duration with precision equal to at least one second. Such a pump is integrated into the line or duct of each flavouring (103, 114) and is directly connected to the logic unit (100) to be managed according to said management algorithm (133), which thus controls its activation times and, consequently, the exact dispensed quantity of a flavouring. This solution is equivalent to the abovementioned dosing means combined with sensors in effectively dosing the quantity of a flavouring according to said algorithm; however, the modifications of the parameters of the same algorithm, for the purposes of the dosage, can be executed only manually, as they do not have the automatic feedback offered by the sensor means. Such a simplified dosing solution, without automatic setting, is suitable for low cost systems and apparatuses; for example, it is advantageously combined with simplified identification means, of the mechanical type, described hereinafter. Furthermore, it is noted that the described use of said peristaltic pump is suitable only for substantially fluid flavourings; in the case of powdered or granular flavourings, the dosage control has to be instead executed by means of a different adjusting member and at least one of the additional sensor means described above, for example to detect the weight actually dispensed, since a peristaltic pump cannot distribute powder.

It is clarified that in the present description the term flavoured ice (135) means ice produced from a flavoured mixture (108) composed of water (129) combined with a flavouring substance called flavouring (104), which is dosed and introduced in mixture or water solution; preferably, the water is taken directly from the water supply network. The proposed system (10) offers the possibility of choosing among multiple flavourings (104) which are individually dosed and dispensed on independent lines (103, 114), and are individually replaceable. For this purpose, uniformed and removable containers are provided, like cartridges (105a - 105n) having a standardized conformation, where each cartridge contains a particular flavouring which can be identified or recognized by the system (10, 100) and can be also controlled in its residual quantity (117), with possible additional information.

Furthermore, in common use and in the present description, the term flavouring (104) conventionally means any flavouring substance suitable for giving at least a particular taste and/or a particular smell and/or a particular nutritional contribution to a liquid mixture, and to the ice obtained from it (135). By way of mere example, a flavouring (104) can be a fruit juice or an extract thereof, or it is a syrup, a concentrated beverage or an infusion. More generally, it (104) is any food preparation, of natural or synthetic origin, which is suitable for being mixed with water in order to obtain flavoured ice (135) for human consumption, being produced for this purpose as an industrial semi-finished product and made available inside said uniformed containers or cartridges (105a - 105n). Therefore, it can be supplied in liquid or semi-liquid form or in gel, or in dried form as powder or granules, compatibly with the dosage means provided. Furthermore, a flavouring can contain food additives or supplements.

The proposed system (10) integrates the sensor means (116 - 120) and the control members (109, 113) in each flavouring load duct (103, 104, 114) to individually adjust the dosage in the water (107, 108, 110, 129); each individual flavouring (104) is inside a container integrated at the origin of its load and dosage duct (104, 106, 114), where a load cell (117) constantly detects its weight or controls the residual quantity of each flavouring by sending such data to the logic unit (100). For the purposes of the invention, uniformed containers are thus provided like cartridges (105a - 105n), the same for all flavourings, which are integrated into corresponding housing seats (103, 106); in these seats, they can be easily inserted and removed, and are also immediately recognized by the system (10) by means of said integrated automatic identification means (115, 116) which allow the logic unit (100) to univocally represent each container which is present and calculate the residual quantity (117) of the available flavouring.

Such a uniformed configuration of the containers like cartridges is also advantageous since it allows the system (10) to integrate one or more special cartridges, containing a cleaning and/or sanitizing substance instead of a flavouring, so as to carry out automatic washing with cleansing using the same logic unit (100), a similar independent duct with similar dispensing means, as described hereinafter.

Preferably, each uniformed container has a rigid or semi-rigid box-like and parallelepiped conformation, like a printer cartridge which is removable and is suitable for containing and releasing a powder or liquid in a controlled way. For the sake of simplicity of the description, therefore, in the present description the abovementioned uniformed container is called cartridge (105a - 105n). This term, however, means any container or bag of the rigid or semi-rigid type, provided with an interface portion which is standardized for integration into the system (10), like a compatible coupling, so as to be inserted and blocked into the corresponding housing seat (106) from which the respective load and dosage duct of the flavouring (104, 114) originates, and also so as to allow easy removal in the event of a flavouring change or when it is empty.

Each single cartridge (105a - 105n) is provided with an automatic identification means (115) suitable for being decoded by a corresponding reader means (116) integrated in the proximity of its housing seat (106), with the cartridge inserted. By way of mere example, for the purposes of the invention, the graphic codes of the type with bars or quick response called QR are advantageous, being printed directly on the outer surface of the cartridge or on a label; alternatively, unidirectional radiofrequency identification means of the type called RFID are advantageous, or bidirectional of the type called NFC or equivalent identification systems. In the case of said graphic codes, opto-electronic or scanner type reader means are suitable, individually integrated into each housing seat; in the case of said means of the RFID or NFC type, it is instead possible to adopt a centralized detection system. In both cases, the reader means is directly connected to the logic unit (100, 121) which controls the entire system (10). In a cheaper embodiment variant simplified identification means are provided, made with a mechanical connection between a cartridge and the seat where it is inserted; these means are equivalent in recognizing at least the presence of a cartridge, correctly inserted and functioning, with dedicated and/or differentiated or error-proof connections.

With the abovementioned automatic identification system (115, 116), advantageously, in addition to recognizing the type of flavouring, it is also possible to check its expiry date. From the realization point of view, this operation is particularly easy in the case of said automatic identification means of the QR or RFID type, where multiple pieces of information are conveyed jointly and therefore the expiry control occurs at the same time as the recognition. It is also noted, for food safety purposes, that said automatic expiry control is particularly important where the flavouring is of natural and/or easily degradable origin.

In order to solve the known problems of contamination and reduction of efficiency, by limiting the natural deposit of flavouring substances and limestone, the system (10) proposed by the invention provides the integration of two technical solutions which act effectively in combined and synergistic way, with anti-accumulation function: a thin layer of protective coating (132) which significantly reduces the roughness of the surfaces which contact the flavoured mixture (108), like a smoothing and protective coating with also anti-accumulation effect, in combination with automatic washing means of the same surfaces.

More in the technical detail of said protective coating (132), it is obtained by applying a thin layer of quartz, or an equivalent material, having a thickness between 1 micrometer and 120 micrometers, on the evaporating surface; such an application can be advantageously executed by means of known nanotechnologies. By way of mere example, in the case of a metallic evaporator with chemical nickel or tin plating, a protective coating layer is suitable as described in the mentioned document ITUB20155229A1 (Spinetti). In this way the surface roughness is significantly reduced and the natural accumulation is hindered not only of limestone, but also of the various mineral or biological substances which are in suspension within the flavoured mixture. Said coating must be thus applied at least on the surfaces of the evaporator which contact the flavoured mixture (108, 132, 132a, 132b, 132c) (Figs. 1, 2a, 2b, 2c).

For the purposes of the present invention, said coating (132, 132a, 132b, 132c) makes the surfaces of the evaporator extremely smooth and hinders the initial clinging of the solid residues of flavourings and limestone which progressively tend to stratify as deposits, thus originating the mentioned contamination and functional degradation. In practice, it makes washing faster and more effective, with high food safety; furthermore, the same coating improves the mechanical characteristics of the evaporator, protecting it from the aggressive substances of the detergents and increasing its duration. Consequently, when combined with an automatic washing system, the abovementioned protective coating optimizes the safety and efficiency of the entire production system. To this aim, automatic washing means are thus integrated within the apparatus used for producing flavoured ice with the proposed system (10). The washing means are of the known type, such as pumps and atomizers, and are advantageously controlled by the same logic unit (100) of the apparatus; they act directly at least on said portion of the evaporator (102, 102a, 102b, 102c, 132) which contacts the flavoured mixture, where the abovementioned protective coating is applied (Figs. 2a, 2b, 2c).

More in the operational detail of the production control, in the system (10) proposed by the invention the abovementioned automatic dosing and washing means are managed according to a management algorithm (133) as the main program of the system, and a washing algorithm (134), both included in the logic unit (100) (Fig. 1). In particular, the management algorithm (133) controls the dosage and production and can be parameterized, that is it has variable control parameters, so as to optimize the intervention methods of the adjusting members (109 - 113, 130), together with the sensor means (105, 120), during each production cycle. For each production cycle of flavoured ice (135), it (133) executes a variable and calibrated dosage (103 - 131) of the selected flavouring (105a - 105), according to the following operational phases (F1 - F7):
F1) first phase where it (133) activates an adjusting member among those simultaneously available, such as a valve or a pump, so as to minimize the interaction between the flavouring used (104, 105a - 105n) and the components of the system engaged in the production cycle, thus limiting the surfaces to be cleaned. This phase is possible, as it occurs in the case where multiple adjusting members and multiple production configurations are simultaneously included;
F2) second phase where it (133) controls which flavourings (104, 105a - 105n) are available upstream of said adjusting members (109, 113), by means of coupled automatic identification means (115, 116) such as a barcode (116) reader (115) or equivalent means directly connected to the logic unit (121). This phase is possible, as it is carried out only if necessary;
F3) third phase where it (133) controls the available quantity of the desired flavouring (104), by means of a sensor means (117) which detects the residual weight of the corresponding cartridge (105a - 105n), upstream of said adjusting members (109, 113);
F4) fourth phase where it (133) programs the quantity of flavouring (104) which has to be introduced into the water (107, 129), at each production cycle or periodically, in order to obtain the optimal flavoured mixture (108) to make flavoured ice as desired;
F5) fifth phase where it (133) controls the quantity of flavouring (104) which has actually been introduced into the water (108), by means of at least one of the following sensor means downstream of said adjusting members (109, 113): a flow detector (118) or an opacity detector (119) or a level meter (120) or by combining these detections with each other;
F6) sixth phase where it (133) programs the periodic intervals in which the production of flavoured ice (10) takes place, being for example daily or weekly, alternating the flavourings used where planned (104, 105a - 105n);
F7) seventh phase where it (133) programs the defined quantity, by weight, of flavoured ice which has to be produced in a single production cycle, using a precise flavouring (104, 105a - 105n).

With regard to the first phase (F1), it is noted that an apparatus for producing flavoured ice acting in accordance with the system of the present invention can have multiple constructive configurations (A1 - A4), not encompassed by the wording of the claims, depending on the production method adopted. For example, it is known that in order to produce solid and transparent ice cubes with the conventional method of spraying from the bottom upwards, where the evaporator is placed at the top, to help defrosting in the final phase of collecting the pieces of ice it is advantageous to load the water in advance in the upper part of a floodable evaporator, and then let it drop through the drain holes into an internal tank filled with water. For the purposes of the invention, in order to safely produce flavoured ice, it is advisable to avoid this path for the flavouring as it would dirty the evaporator in the upper part which is difficult to reach by the atomizers in the automatic washing phase, facilitating bacterial proliferation; therefore, in a combined apparatus to produce simple ice and also flavoured ice, it is appropriate to plan the mixing of the flavouring directly in the lower water tank, which acts as a mixing tank.

More in detail of the operational phases (F3) and (F4), it (133) provides for each flavouring (104, 105a - 105n) two groups of modifiable parameters, where a first group (DA, DK, DD) includes the parameters relating to the dosed quantity or concentration, while a second group (RD, SD) comprises the parameters relating to the management of said dosage. In particular, in said first group:
DA) indicates the activation duration of an adjusting member, such as a valve (109) or a pump (113), namely it defines the time of their actioning which corresponds to the exact quantity of flavouing (104) to be introduced into the mixing tank (107), in mixture or in aqueous solution, so as to produce a flavoured mixture (108) in the optimal way to obtain with repeatability ice (135) having the intended taste;
DK) indicates the quantity by weight of the flavouring actually introduced, when detected by a sensor means such as a load cell (117) which measures the weight of the flavouring already dispensed by a cartridge, to block its introduction by means of the adjusting members (109, 113) when a set value is reached;
DD) indicates the density of the dosage actually occurred, or concentration, when detected by a sensor means such as an opacimeter (119) which measures the level of opacity of the flavoured mixture (108), which corresponds to the quantity of flavouring substance actually already introduced or concentration, to block its introduction by means of the adjusting members (109, 113) when a set value is reached;

In said second group instead:
RD) indicates the delay of the dosage of a flavouring, with respect to the start of the cold cycle, namely it determines the delay time of the introduction from the start of said cycle;
SD) indicates the waiting time for the following introduction of a flavouring, also known as second charge. The system (10) envisages two distinct cases, depending on the apparatus used: in the case of a periodic cold cycle, SD indicates when the second introduction of a flavouring in the same cycle has to be started, where if the SD value is equal to zero then the second charge is not carried out; in the case of a continuous cold cycle, SD instead indicates the constant interval which exists between the various introductions of a flavouring.

The proposed system (10) allows to automatically produce flavoured ice (135) in food safety, avoiding the abovementioned contaminations, thanks to the fact that the dosage and introduction of the selected flavouring are automatic and are executed on lines individually dedicated to each flavouring (103, 104, 105a - 105n, 114), involving a small number of components and surfaces in the contact with the flavoured mixture (108) so as to significantly limit cleaning operations. To this aim, in particular, the system (10) provides that the management algorithm (133), which is suitable for controlling the production of ice (135) with automatic dosage of the flavourings (103 - 129), periodically suspends the production of ice to execute an automatic washing according to a washing algorithm (134) which is included in the same logic board (100) (Fig. 1) and is secondary, or is subjected, to the abovementioned management algorithm. The washing algorithm (134) provides, alternatively, a simple rinsing or a washing with detergents for a deeper cleansing; therefore, once the washing algorithm is activated both in rinsing and in cleansing, it is not possible to produce ice and neither can flavourings be introduced until the washing is finished, automatically reactivating the system for production purposes.

In the first case, rinsing is periodically executed with mains water, without detergents, to prevent the progressive deposit of the residues of flavoured mixture (108) which may cause hygiene problems and/or affect the taste of the ice subsequently produced. A simple rinsing is automatically started (133, 134) at least at each change of flavouring, so as to avoid contamination between flavourings. More in detail of the rinsing, the washing algorithm (134) includes at least three modifiable parameters: PR, DR and NR, where:
PR) indicates the periodicity of the rinsing cycles, namely it defines every how many ice production cycles a rinsing cycle has to be started or similarly, it defines every how many minutes this takes place in the case of continuous functioning apparatuses;
DR) indicates the net duration of the rinsing, namely it defines every how many minutes a single rinsing has to last, net of the time required for the initial water loading and final discharge, as they are variable, for example, depending on the network pressure. A rinsing cycle initially includes the total discharge of the liquid present in the mixing tank (107, 108), by means of the corresponding discharge valve (111, 112, 126), and it then includes its filling with clean water by means of the corresponding load valve (110), carrying out a continuous control of the filling by means of a level sensor (120), and then it starts the rinsing phase. It is noted that each washing, like said rinsing, is at least made on the surfaces which have contacted the flavoured mixture, and is executed by means of integrated means such as pumps and atomizers configured each time depending on the evaporator used and/or accessory components included in the apparatus (A1 - A4) not encompassed by the wording of the claims;
NR) indicates the number of rinses, namely it defines how many times in a row the phase referred to in said parameter DR has to be repeated.

Furthermore, in the second case, where provided for the purpose of deeper cleansing and/or for sanitization, the system (10, 133) starts the washing algorithm (134) using water with also a detergent substance. Therefore, content is thus drawn from a tank containing a particular cleaning product, according to the set washing purposes; this occurs only if at least two rinsing cycles are involved, that is where the abovementioned NR parameter is at least equal to 2, and only simultaneously with the first rinsing cycle so as to always end the washing operations with a final rinsing with water only.

More in the operational detail of washing with detergents, the proposed system (10) allows to use the means described above (103 - 131) suitable for containing (105a - 105n), identifying (115, 116), dosing and dispensing flavourings (104), also for containing, identifying and dispensing a detergent or sanitizing substance, mixing it with water in the same mixing tank (107, 110) or sending it directly to the atomizers or to equivalent washing means. To this aim, it is advantageous to integrate into the system (10) a special cartridge which contains a detergent or sanitizing substance, which has a conformation completely similar to a cartridge for flavourings (105a - 105n, 115) being similarly insertable and removable with respect to a housing seat (106, 116) connected to a similar duct, with similar sensor means and adjusting members. In this case, for safety, as soon as this special cartridge is identified (115, 116) by the system (10, 100), the management algorithm (133) prevents the execution of any cycle of production of flavoured ice and it only allows the execution of a washing or sanitizing cycle by starting the corresponding washing algorithm (100, 134). Alternatively, it is possible to take a detergent or sanitizing substance, pure or already combined with water, from a container added or external to the abovementioned dosing means (103 - 131), being however managed with the same washing algorithm (134) and the same logic unit (100, 133).

Furthermore, depending on the production needs, the proposed system offers a wide range of choice of the additive substances which can be added to the water for washing purposes, with a detergent or cleaning or hygienizing or sanitizing or descaling effect or other purpose; by way of mere example, it is advantageous to also use a hygienizing and/or descaling product in the first rinsing cycle, and then execute the cleansing.

An apparatus (A1 - A4) suitable for producing flavoured ice (135) with the system (10) described above is each time configured depending on the type of ice to be produced, having a particularly shaped evaporator and accessory means adapted to its production method; said apparatus is not encompassed by the wording of the claims. For example, ice can be obtained by direct immersion of refrigerated peduncles (102a, 138) into said already flavoured mixture (107, 108), or by dropping from above onto a refrigerated hive (102b, 139) or by spraying from below on shaped and refrigerated cells (102c, 140) (Figs. 2a, 2b, 2c). In principle, in order to produce flavoured ice according to the proposed method all types of refrigerating machines generally used in the professional field to produce ice are suitable, also called producers of ice or ice makers, where the automatic dosing and washing means described above (103 - 131) are advantageously integrated, also with said management and washing algorithms (100, 133, 134) and said protective coating (132), which follows the configuration of the evaporator (102a, 102b, 102c) being applied each time at least in correspondence with the surfaces which contact the flavoured mixture.

Therefore, if the realization is intended of a newly built apparatus (A1 - A4) for producing flavoured ice, not encompassed by the wording of the claims, there are no difficulties in integrating the system proposed by the invention. In the case of adaptation of an existing model by way of an improvement modification or retrofit, for the purposes of the system of the present invention an apparatus (A1 - A4) must be instead a refrigerating circuit machine provided with a compressor, a condensing unit (101) and an evaporator (102) shaped depending on the type of ice to be produced, the mixing tank (107) and the dosing and washing means described above being positioned accordingly. In addition, the management (133) and washing (134) algorithms must be included in the logic unit (100) and also the abovementioned protective coating (132) must be applied at least on the evaporator (102a, 102b, 102c). Generally, a removable storage container (136) is also included in the apparatus, for the flavoured ice already produced; as an alternative or for continuous cycle production, the ice is stored outside.

More in the construction detail, in an optimal configuration, the abovementioned system (10) for producing flavoured ice can be implemented in an apparatus (A1 - A4) of the refrigerating machine type for ice (100, 101, 102) not encompassed by the wording of the claims, also known as producer of ice or ice maker as described above, the following integrations being provided in it (A1 - A4):
- housing seats (106) for the cartridges with the flavourings (105a - 105n), alternatively integrated inside or applied externally to the apparatus, where said cartridges are individually identified automatically (116) being provided with their own identification codes (115), and where they are individually weighed by means of a load cell (117) integrated into said housing seat;
- load ducts (114) of the individual flavourings like connection pipes to the adjusting members (109, 113) which are separated from each other as independent dosage lines (103), individually dedicated to each flavouring and corresponding cartridge (104, 105a - 105n);
- common mixing tank (107) for the water (110, 129) and for each dosage line of the flavourings (103, 104, 105a - 105n, 114), where the flavoured liquid mixture (108, 130, 131) is directly taken to conduct it to the evaporator (102, 132);
- parameterizable management algorithm (133, F1 - F7), which is included by the central logic unit (100);
- parameterizable washing algorithm (134), which is in the same logic unit (100) and is activated by the management algorithm (133);
- adjusting members of the type pumps and valves (109, 113), which are controlled by the logic unit (100, 133, F1 - F7) so as to control the duration of the action of each member, in order to introduce the predefined quantity of a flavouring (104) into the mixing tank (107) with the water (110);
- sensor means (116 - 120) for identifying and verifying the effective dosage or the quantity of each flavouring (104) introduced into the mixture (108), so that the duration of the actioning of said members (109, 113) is adjusted in combination with the detected weight (117), the detected flow (118), the detected level (120), the detected density and opacity (119), where all these quantities are conveyed to the electronic board which acts as a central logic unit (100) and which includes the management algorithm (133, F1 - F7), obtaining an optimal control of the dosage of each flavouring (104, 105a - 105n) in each load line (114). These sensor means combined with the adjusting members allow to create a flavoured mixture (108, 135) in a calibrated way, namely uniform and repeatable, according to the desired concentration of a single flavouring, also with a self-adjustment of the dosage;
- unidirectional control lines (Lc1) from the various sensor means to the logic unit (121 - 125) and from this one to the condensing unit (128);
- bidirectional control lines (Lc2) between the logic unit and the adjusting members (126, 127);
- water ducts (Lh) towards the mixing tank (107), for the introduction of water taken from the network (129), and from the same tank to take the already flavoured mixture (108, 131);
- protective coating (132) with smoothing and anti-accumulation effect, at least on the surfaces of the evaporator contacting the flavoured mixture (102a, 102b, 102c, 108) (Fig. 2a, 2b, 2c);
- an independent washing duct, similar to a flavouring load duct (114), originating from a special cartridge shaped like a flavouring cartridge but containing a detergent substance, which is detected with similar automatic identification means (115, 116) and weight (117);
- automatic washing means of the type pumps and atomizers, directly connected to the abovementioned washing duct and/or to the mixing tank and/or to the water supply network, which act on the evaporator (102, 132) and on the other surfaces to be cleaned.

In a simplified configuration, suitable for manual adjustments of the dosage of the single flavourings (104, 105a - 105n, 133), in each line (103, 114) there is a peristaltic pump of the calibrated flow type with an activation duration control with an accuracy of at least one second, which acts as a dosing means in combination with at least one flavouring identification means made with a dedicated, error-proof mechanical connection between a cartridge (105a - 105n) and its housing seat (106).

By way of mere non-limiting example, depending on the type of ice to be produced, an apparatus (A1 - A4) acting in accordance with the system proposed by the invention (10) can alternatively have the following configurations not encompassed by the wording of the claims:
- in the case of immersion ice (A1), the flavouring is dosed and introduced into an internal mixing tank in which an evaporator (102a, 132, 138) is partially immersed including peduncles facing downwards (Figs. 2a, 3a);
- in the case of solid modular ice as cubes (A2), the flavouring is dosed and introduced into a mixing tank located outside in the lower part of the apparatus, from where the flavoured mixture is taken and dropped from above in a compartment or hive evaporator (102b, 132, 139) (Figs. 2b, 3b);
- in the case of solid and transparent ice obtained by spraying from below (A3), the flavouring is dosed and introduced into a mixing tank preferably located in the upper part of the apparatus, from where the flavoured mixture is forcibly taken with a pump serving an atomizer facing upwards, towards an evaporator (102c, 132, 140) particularly shaped with small-cup cells (Figs. 2c, 3c);
- in the case of flake ice or flaker (A4), the flavouring is dosed and introduced into a mixing tank which is preferably integrated outside the apparatus, in the upper part of the rear wall.

### Nomenclature

(10) system for producing flavoured ice, with automatic dosing and washing means, according to the present invention;
(100) centralized logic unit, for the control of the entire apparatus;
(101) condensing unit of the refrigerating circuit;
(102) evaporator, shaped each time depending on the desired ice size; (102a) evaporator with peduncles for immersion; (102b) evaporator with hive for ice cubes; (102c) evaporator with cup cells for spraying from below;
(103) integrated automatic dosing system on independent lines;
(104) flavouring, flavouring substance individually contained in a container uniformed like a cartridge;
(105a, 105b, 105c, 105n) removable cartridge, container uniformed for a single flavouring, multiple cartridges placed side by side on independent dosage lines being simultaneously present in the system;
(106) housing seat for a removable cartridge;
(107) mixing tank;
(108) flavoured mixture;
(109) flavouring dosing valve, as an adjusting member;
(110) water load valve, as a possible adjusting member;
(111) liquid discharge valve from evaporator, where provided;
(112) liquid discharge valve from mixing tank;
(113) flavouring dosing pump, as an adjusting member;
(114) flavouring load duct, dosage and dispensing line;
(115) automatic identification means, such as a barcode or equivalent;
(116) sensor means which detects an automatic identification means, such as a barcode reader or equivalent;
(117) sensor means detecting a weight, such as a load cell under a cartridge;
(118) sensor means which detects a flow, such as a flow meter downstream of a cartridge;
(119) sensor means which detects the opacity of a liquid mixture, as an opacimeter;
(120) sensor means which detects a level or a residual volume in a liquid mixture, as a level meter;
(121) flavouring identification line;
(122) line for detecting weights, coming from the load cells;
(123) line for detecting flows, coming from the flow meters;
(124) line for detecting opacities, coming from the opacimeter;
(125) line for detecting level, coming from the level meter;
(126) bidirectional valve control line;
(127) bidirectional pump control line;
(128) evaporator control line;
(129) water load duct, preferably from the water supply network;
(130) pump for taking flavoured mixture;
(131) duct for taking flavoured mixture;
(132) protective coating which reduces surface roughness with a smoothing and anti-accumulation effect, being applied at least on the surfaces of the evaporator which contact food ice such as, for example, the peduncles or the hive or the cup cells according to the type of ice to be produced;
(133) management algorithm, with variable parameters, for controlling the production of ice and the automatic dosage of the individual flavourings;
(134) washing algorithm, with variable parameters, for controlling automatic rinsing and automatic washing with detergents;
(135) flavoured ice;
(136) storage container for flavoured ice;
(137a) inlet of the refrigerant fluid into the evaporator;
(137b) outlet of the refrigerant fluid from the evaporator;
(138) peduncles for immersion;
(139) hive;
(140) cup cells for spraying;
(A1 - A4) apparatus for producing flavoured ice acting in accordance with the system proposed by the invention, in various embodiment variants according to the type of ice to be produced, not encompassed by the wording of the claims. For example, the first variant (A1) produces ice by immersion with a peduncle evaporator; the second variant (A2) produces modular ice by dropping from above with a hive evaporator; the third variant (A3) produces ice spraying from below, by dropping, with a small cup evaporator; the fourth variant (A4) produces flake ice or flaker;
(F1 - F7) operational phases of a production cycle, according to the management algorithm;
(Lc1) control line of the detections and of the unit, connected to the logic unit and schematically indicated with a dashed line, where the flow of information is unidirectional as indicated by the arrow;
(Lc2) control line of the dosage, connected to the logic unit and schematically indicated with a dashed line, where the flow is bidirectional as indicated by the arrow being for active control means such as valves and pumps;
(Lh) water line or duct, for water or flavouring mixture, schematically indicated with a continuous line.

## Claims

1. System (10) for producing flavoured ice (135) for food use, by means of a refrigerating circuit composed of a central logic unit (100), a compressor, a condensing unit (101) and an evaporator (102) shaped depending on the type of ice to be produced, which has multiple flavourings (104) individually selectable to give the ice produced a particular taste and/or a particular smell and/or a particular nutritional contribution; and wherein said flavourings (104) are enclosed in uniformed and removable containers such as cartridges (105a - 105n), integrated into the system (10) in corresponding housing seats (106); and wherein said flavourings (104) are mixed with water (129) forming a liquid flavoured mixture (108), which is introduced into a duct (130, 131) up to the evaporator (102) which makes said flavoured ice (135); and wherein the surfaces of the evaporator (102) which contact the flavoured ice (135) have a protective layer (132); and wherein said logic unit (100) controls said system (10) with executive programs included in it; and wherein said system (10) has a common mixing tank (107), into which the water and the individual flavourings (104, 105a - 105n) are directly introduced with their own ducts (114, 129) and with their own dosing means connected to the logic unit (100), wherein each individual duct (114) of a flavouring starts from a housing seat (106) and arrives at said mixing tank (107) forming load and dosage lines (103) which are independent for each flavouring (104, 105a - 105n, 114); and wherein means are included to detect the identity of the selected flavouring (104, 105a - 105n); and wherein said dosing means operate according to a management algorithm (133) with variable dosage control parameters, being preset as a library of parameters and also modifiable; and also wherein said management algorithm (133) is the main executive program of the system (10, 100) which manages the entire production cycle (101, 102, 130, 131, 135) and also controls said dosing means by adjusting individually the introduction of the selected flavouring (104, 105a - 105n) and of the water (110, 129) into said mixing tank (107), forming said flavoured mixture (108) according to the set values of said parameters (100 , 133).

2. System (10) for producing flavoured ice, according to the previous claim, **characterized in that** the dosing means, which are automatic and combined with each other, consist of adjusting members (109, 110, 113) and sensor means (116 - 120) directly connected to the logic unit (100) with dedicated control lines (121 - 127); and wherein said adjusting members comprise a dosing valve (109) and a dosing pump (113) in each flavouring duct (103, 114), and also a valve (110) in the water duct (129); and wherein said flavourings are individually contained in cartridges (104, 105a - 105n) provided with an automatic identification means or univocal code (115) which is automatically detected by a corresponding sensor means (116) which is integrated in the proximity of its housing seat (106); and wherein said sensor means comprise a weight detector (117) under each cartridge (105a - 105n, 106) upstream of the adjustments (109, 113), and a sensor means which detects the flow (104, 118) in the duct (114) downstream of the adjustments, in addition to an opacity detector (119) and a level meter (120) which control the flavoured mixture (108) in said mixing tank (107); and wherein said management algorithm (133) controls all said dosing means (103 - 127) by progressively adjusting the introduction of the selected flavouring (104, 105a - 105n) and of the water (110, 129) into said mixing tank (107, 108) depending on the values actually detected by said sensor means (116 - 120), with a variable and calibrated dosage (103 - 129) of the flavouring like a continuous self-adjustment of the dosage.

3. System (10) for producing flavoured ice, according to claim 1 or 2, **characterized in that** said dosing means comprise a peristaltic pump of the calibrated flow-rate type with a control of the activation duration with precision equal to at least one second.

4. System (10) for producing flavoured ice, according to claims 1 or 3, **characterized in that** said means for identifying the individual flavourings are dedicated, mistake-proof mechanical connections between the container of a flavouring or cartridge (105a - 105n) and its housing seat (106).

5. System (10) for producing flavoured ice, according to claim 2, **characterized in that** said automatic identification means (115) and the corresponding sensor means (116) execute the recognition of a flavouring and also control its expiry date; said identification means (115, 116) being alternatively of the QR code type or the RFID type.

6. System (10) for producing flavoured ice, according to any of the previous claims, **characterized in that** it has washing means which act at least on the evaporator (102), in correspondence with the surfaces which contact the flavoured ice (135).

7. System (10) for producing flavoured ice, according to the previous claim, **characterized in that** said washing means are automatic and integrated, they are directly connected to said logic unit (100) and are controlled by a washing algorithm (134) which is included in the same logic unit (100), with modifiable control parameters, for executing rinsing with water and/or washing with detergents; and wherein said management algorithm (133) temporarily suspends the production cycle to start an automatic washing according to said washing algorithm (134).

8. System (10) for producing flavoured ice, according to claims 6 and 7, **characterized in that** at least one of said cartridges (105a - 105n) contains a detergent.

9. System (10) for producing flavoured ice, according to claim 2, **characterized in that** for each cycle of production of flavoured ice (135), said management algorithm (100, 133) executes said variable and calibrated dosage of the selected flavouring (104, 105a - 105n, 115) according to the following operational phases (F1 - F7): F1) it activates an adjusting member (109, 113) among those simultaneously available in the system, so as to minimize the interaction between the flavouring used (104, 105a - 105n) and the components of the system that are engaged in the production cycle, limiting the surfaces to be cleaned;
F2) it possibly checks which flavourings (104, 105a - 105n) are available upstream of said adjusting members (109, 113), by means of the automatic identification means (115, 116);
F3) it controls the available quantity of the desired flavouring (104), upstream of said dosing members, by means of the sensor means (117) which detects the residual weight of the corresponding cartridge (105a - 105n);
F4) it programs the quantity of flavouring (104) which has to be introduced into the mixing tank with the water (107, 129) to obtain the flavoured mixture (108);
F5) it dispenses the flavouring and simultaneously checks the quantity of flavouring (104) which has actually been introduced into the water (108), by means of at least one of the following sensor means downstream of said adjusting members (109, 113): the flow detector (118) or the opacity detector (119) or the level meter (120) or by combining these detections;
F6) it programs the periodic intervals in which the production of flavoured ice takes place;
F7) it programs the defined quantity, by weight, of flavoured ice to be produced in a single production cycle with a single flavouring.

10. System (10) for producing flavoured ice, according to the previous claim, **characterized in that** in the abovementioned phases F3, F4 and F5, for the dosage of each selected flavouring (104, 105a - 105n) the management algorithm (133) considers a first group of modifiable parameters (DA, DK, DD) relating to the quantity actually dosed or concentration, and a second group of modifiable parameters (RD, SD) relating to the management of the dosage; and wherein said parameters of the first group are: (DA) is the duration of activation of an adjusting member (109, 113), (DK) is the quantity by weight (117) of the flavouring dispensed by a cartridge (104, 105a - 105n), (DD) is the density of the dosage actually occurred (108, 119); and wherein said management algorithm (133) blocks the introduction of the flavouring (104, 109, 113, DA) when a set value (DK, DA) is reached; and wherein said parameters of the second group are: (RD) is the delay in the introduction of a flavouring with respect to the start of a cold cycle for the production of ice (100, 101, 102, 135) while (SD) is the waiting time for the following introduction.

11. System (10) for producing flavoured ice, according to any of the previous claims, **characterized in that** said protective coating ( 132) is a layer with a thickness between 1 micrometer and 120 micrometers in quartz or equivalent, so as to reduce surface roughness with a smoothing and anti-accumulation effect.

## Patentansprüche

1. System (10) zur Herstellung von Eis mit Geschmack (135) für Lebensmittelzwecke mittels eines Kühlkreislaufs, bestehend aus einer zentralen Logik-Einheit (100), einem Kompressor, einer Kondensator-Einheit (101) und einem Verdampfer (102), dessen Form von der Art des herzustellenden Eises abhängt und mehrere Aromastoffe (104) beinhaltet, die individuell ausgewählt werden können, um dem hergestellten Eis einen bestimmten Geschmack und/oder einen bestimmten Geruch und/oder einen bestimmten Nährstoffgehalt zu verleihen; und bei dem die genannten Aromastoffe (104) in einheitlichen und entfernbaren Behältern wie Kartuschen (105a - 105n) eingeschlossen sind, die in entsprechenden Gehäusesitzen (106) in das System (10) integriert sind; in dem die erwähnten Aromastoffe (104) mit Wasser (129) gemischt werden, wodurch eine flüssige Geschmacksmischung (108) entsteht, die in eine Leitung (130, 131) bis zum Verdampfer (102) geleitet wird, der das erwähnte Eis mit Geschmack (135) herstellt; in dem die Oberflächen des Verdampfers (102), die mit dem Eis mit Geschmack (135) in Kontakt treten, eine Schutzschicht (132) bilden; in dem die Logik-Einheit (100) das System (10) mit den darin enthaltenen Steuerprogrammen überwacht; in dem das System (10) einen gemeinsamen Mischbehälter (107) enthält, in den das Wasser und die einzelnen Aromastoffe (104, 105a - 105n) über eigene Leitungen (114, 129) und eigene, mit der Logik-Einheit (100) verbundene Dosiervorrichtungen, direkt eingefüllt werden, in dem jede einzelne Leitung (114) eines Aromastoffs von einem Gehäusesitz (106) ausgeht, den genannten Mischbehälter (107) erreicht und für jeden Aromastoff (104, 105a - 105n, 114) unabhängige Füll- und Dosierleitungen (103) bildet; in dem Vorrichtungen zur Erkennung der Identität des ausgewählten Aromastoffs enthalten sind (104, 105a - 105n); und in dem die Dosiervorrichtungen gemäß eines Steueralgorithmus (133) mit variablen Dosier-Kontrollparametern funktionieren, die als Parameter-Bibliothek voreingestellt und ebenfalls geändert werden können; und in dem der Steueralgorithmus (133) das Hauptprogramm des Systems (10, 100) darstellt, das den gesamten Produktionszyklus (101, 102, 130, 131, 135) steuert und auch die Dosiervorrichtung überwacht, indem es die Zufuhr des ausgewählten Aromastoffs (104, 105a - 105n) und des Wassers (110, 129) in den Mischbehälter (107) einstellt und die Geschmacksmischung (108), in Übereinstimmung mit den eingestellten Werten der genannten Parameter (100, 133) bildet.

2. System (10) zur Herstellung von Eis mit Geschmack, gemäß dem vorhergehenden Anspruch, **dadurch gekennzeichnet, dass** die automatischen, miteinander verbundenen Dosiervorrichtungen aus Einstellelementen (109, 110, 113) und Sensoreinrichtungen (116 - 120) bestehen, die über besondere Steuerleitungen (121 - 127) direkt mit der Logik-Einheit (100) verbunden sind; und bei dem die Einstellelemente ein Dosierventil (109) und eine Dosierpumpe (113) in jeder Aromastoffleitung (103, 114), sowie ein Ventil (110) in der Wasserleitung (129) beinhalten; und in dem die genannten Aromastoffe einzeln in Kartuschen (104, 105a - 105n) enthalten sind, die mit einer automatischen Identifikationseinrichtung bzw. einem eindeutigen Code (115) ausgerüstet sind, der automatisch von einem entsprechenden Sensor-Element (116 in der Nähe seines Gehäusesitzes (106) integriert) erfasst wird; und bei dem die Sensoreinrichtungen einen Gewichtsanzeiger (117) unter jeder Kartusche (105a - 105n, 106) oberhalb der Einstellvorrichtungen (109, 113) beinhalten, sowie eine Sensoreinrichtung, die den Durchfluss (104, 118) in der Leitung (114) unterhalb der Einstellvorrichtungen erfasst, zusätzlich zu einem Trübungsmelder (119) und einem Füllstandsmesser (120), welche die Geschmacksmischung (108) im Mischbehälter (107) kontrollieren; und bei dem der Steueralgorithmus (133) alle Dosiervorrichtungen (103 - 127) regelt, indem er die Zufuhr des ausgewählten Aromastoffs (104, 105a - 105n) und des Wassers (110, 129) in den Mischbehälter (107, 108) fortlaufend anpasst, die von den tatsächlich von den Sensoreinrichtungen (116 - 120) gemessenen Werten abhängt, wodurch eine variable und kalibrierte Dosierung (103 - 129) des Aromastoffs wie eine kontinuierliche Selbstanpassung der Dosierung erfolgt.

3. System (10) zur Herstellung von Eis mit Geschmack gemäß Anspruch 1 oder 2, **dadurch gekennzeichnet, dass** die Dosiervorrichtung eine Schlauchpumpe vom Typ mit kalibrierter Durchflussrate umfasst, deren Aktivierungsdauer mit einer Präzision von mindestens einer Sekunde gesteuert wird.

4. System (10) zur Herstellung von Eis mit Geschmack, gemäß Anspruch 1 oder 3, **dadurch gekennzeichnet, dass** genannte Vorrichtungen zur Identifizierung der einzelnen Aromastoffe für spezielle, fehlersichere mechanische Verbindungen zwischen dem Behälter eines Aromastoffs oder Kartusche (105a - 105n) und seinem Gehäusesitz (106) bestimmt sind.

5. System (10) zur Herstellung von Eis mit Geschmack gemäß Anspruch 2, **dadurch gekennzeichnet, dass** die automatische Identifizierungsvorrichtung (115) und die entsprechende Sensorvorrichtung (116) die Erkennung eines Aromastoffes vornehmen und ebenfalls sein Verfalldatum kontrollieren; wobei die Identifizierungsvorrichtung (115, 116) alternativ vom QR-Code-Typ oder vom RFID-Typ ist.

6. System (10) zur Herstellung von Eis mit Geschmack gemäß eines der vorhergehenden Ansprüche, **dadurch gekennzeichnet, dass** es Waschvorrichtungen enthält, die zumindest auf den Verdampfer (102) im Bereich der Oberflächen, die mit dem Eis mit Geschmack (135) in Kontakt gelangen, einwirken.

7. System (10) zur Herstellung von Eis mit Geschmack gemäß dem vorhergehenden Anspruch, **dadurch gekennzeichnet, dass** die Waschvorrichtungen automatisch und integriert sind, direkt mit der Logik-Einheit (100) verbunden sind und mit Hilfe eines Waschalgorithmus (134) gesteuert werden, der in derselben LogikEinheit (100) enthalten ist, mit veränderbaren Steuerparametern, um das Spülen mit Wasser und/oder das Reinigen mit Waschmitteln durchzuführen; und in dem der Steueralgorithmus (133) den Produktionszyklus vorübergehend unterbricht, um eine automatische Reinigung gemäß dem Waschalgorithmus (134) zu starten.

8. System (10) zur Herstellung von Eis mit Geschmack gemäß den Ansprüchen 6 und 7, **dadurch gekennzeichnet, dass** mindestens eine der Kartuschen (105a - 105n) ein Waschmittel enthält.

9. System (10) zur Herstellung von Eis mit Geschmack gemäß Anspruch 2, **dadurch gekennzeichnet, dass** der Steueralgorithmus (100, 133) für jeden Produktionszyklus von Eis mit Geschmack (135) die variable und kalibrierte Dosierung des gewählten Aromastoffs (104, 105a - 105n, 115) gemäß folgender Betriebsphasen vornimmt (F1 - F7):
F1) Es wird ein Einstellelement (109, 113) unter den gleichzeitig im System zur Verfügung stehenden Elementen aktiviert, um die Wechselwirkung zwischen dem verwendeten Aromastoff (104, 105a - 105n) und den am Produktionszyklus beteiligten Komponenten des Systems zu minimieren und die zu reinigenden Oberflächen zu begrenzen;
F2) Es überprüft, mit Hilfe der automatischen Identifizierungsvorrichtung (115, 116) gegebenenfalls, welche Aromastoffe (104, 105a - 105n) oberhalb der Einstellelement e (109, 113) verfügbar sind;
F3) Es kontrolliert die verfügbare Menge des gewünschten Aromastoffs (104) vor den Dosiervorrichtungen mittels der Sensoreinrichtung (117), die das Restgewicht der entsprechenden Kartusche (105a - 105n) erfasst;
F4) Es programmiert die Aromastoffmenge (104), die zusammen mit dem Wasser (107, 129) in den Mischbehälter gegeben werden muss, um die Geschmacksmischung (108) zu erhalten;
F5) Es dosiert den Aromastoff und kontrolliert gleichzeitig die Menge desselben (104), die tatsächlich in das Wasser (108) gegeben wurde, mit Hilfe von mindestens einer der folgenden Sensoreinrichtungen, die sich hinter den Einstellelementen (109, 113) befinden: Durchflussmesser (118) oder Trübungsmesser (119) oder Füllstandsmesser (120) oder mittels Kombinierung dieser Messungen;
F6) Es programmiert die regelmäßigen Intervalle, in denen die Produktion von Eis mit Geschmack erfolgt;
F7) Es programmiert die festgelegte Menge an Eis mit Geschmack, die in einem einzigen Produktionszyklus mit einem einzigen Aromastoff hergestellt werden soll.

10. System (10) zur Herstellung von Eis mit Geschmack gemäß dem vorhergehenden Anspruch, **dadurch gekennzeichnet, dass** in den oben erwähnten Phasen F3, F4 und F5 für die Dosierung jedes gewählten Aromastoffs (104, 105a - 105n) der Steueralgorithmus (133) eine erste Gruppe von veränderbaren Parametern (DA, DK, DD), die sich auf die tatsächlich dosierte Menge oder Konzentration beziehen, und eine zweite Gruppe von veränderbaren Parametern (RD, SD) berücksichtigt, die sich auf die Steuerung der Dosierung beziehen; wobei die genannten Parameter der ersten Gruppe folgende sind: (DA) ist die Dauer der Aktivierung eines Einstellelements (109, 113), (DK) ist die gewichtsbezogene Menge (117) des von einer Kartusche (104, 105a - 105n) abgegebenen Aromastoffs, (DD) ist die Dichte der tatsächlich erfolgten Dosierung (108, 119); und wobei der Steueralgorithmus (133) die Zugabe des Aromastoffs (104, 109, 113, DA) blockiert, wenn ein Sollwert (DK, DA) erreicht wird; und wo die erwähnten Parameter der zweiten Gruppe folgende sind: (RD) ist die Verzögerung bei Zugabe eines Aromastoffs in Bezug auf den Beginn eines Kühlzyklus zur Herstellung von Eis (100, 101, 102, 135), während (SD) die Wartezeit für die nachfolgende Zugabe ist.

11. System (10) zur Herstellung von Eis mit Geschmack gemäß einem der vorhergehenden Ansprüche, **dadurch gekennzeichnet, dass** die Schutzschicht (132) aus einer Schicht von einer Dicke zwischen 1 Mikrometer und 120 Mikrometern aus Quarz oder einem gleichwertigen Material besteht, um die Oberflächenrauheit zu reduzieren und eine glättende und Anti-Akkumulations-Wirkung zu erzielen.

## Revendications

1. Système (10) pour la production de glace aromatisée (135) à usage alimentaire au moyen d'un circuit frigorifique composé d'une unité logique centrale (100), d'un compresseur, d'une unité de condensation (101) et d'un évaporateur (102) dimensionnés en fonction du type de glace à produire, disposant de plusieurs aromatisants (104) sélectionnables individuellement pour donner à la glace produite un goût particulier et/ou une odeur particulière et/ou un apport nutritionnel particulier, dans lequel lesdits aromatisants (104) sont contenus dans des conteneurs uniformes et amovibles (105a - 105n) intégrés dans le système (10) dans des logements correspondants (106), dans lequel lesdits aromatisants (104) sont mélangés à de l'eau (129) pour former un mélange liquide aromatisé (108) introduit dans un conduit (130, 131) jusqu'à l'évaporateur (102) qui produit ladite glace aromatisée (135), dans lequel les surfaces de l'évaporateur (102) en contact avec la glace aromatisée (135) sont dotées d'une couche de protection (132), dans lequel ladite unité logique (100) commande ledit système (10) à l'aide de programmes d'exécution qu'elle contient, ledit système (10) étant doté d'une cuve de mélange commune (107) dans laquelle l'eau et les aromatisants individuels (104, 105a - 105n) sont directement introduits via leur propre conduit (114, 129) et avec leur propre moyen de dosage (100), chaque conduit individuel (114) d'un aromatisant partant d'un logement (106) et arrivant à ladite cuve de mélange (107) pour former des lignes de charge et de dosage (103) indépendantes pour chaque aromatisant (104, 105a - 105n, 114), dans lequel des moyens sont inclus pour détecter quel est l'aromatisant sélectionné (104, 105a - 105n), dans lequel lesdits moyens de dosage fonctionnent selon un algorithme de gestion (133) avec des paramètres de commande de dosage variable prédéfinis sous forme d'une bibliothèque de paramètres modifiables et dans lequel ledit algorithme de gestion (133) est le principal programme d'exécution du système (10, 100) qui gère l'intégralité du cycle de production (101, 102, 130, 131, 135) et commande aussi lesdits moyens de dosage en ajustant individuellement l'introduction de l'aromatisant sélectionné (104, 105a - 105n) et de l'eau (110, 129) dans ladite cuve de mélange (107) pour former ledit mélange aromatisé (108) en fonction des valeurs définies pour lesdits paramètres (100, 133).

2. Système (10) pour la production de glace aromatisée selon la revendication précédente, **caractérisé en ce que** les moyens de dosage, qui sont automatiques et combinés entre eux, se composent d'organes de réglage (109, 110, 113) et de moyens de détection (116 - 120) directement connectés à l'unité logique (100) avec des lignes de commande dédiées (121 - 127), dans lequel lesdits organes de réglage comprennent une valve doseuse (109) et une pompe de dosage (113) dans chaque conduit d'aromatisant (103, 114) ainsi qu'une valve (110) dans le conduit d'eau (129), dans lequel lesdits aromatisants sont individuellement contenus dans des cartouches (104, 105a - 105n) dotées d'un moyen d'identification automatique ou d'un code univoque (115) automatiquement détecté par un moyen de détection correspondant (116) intégré à proximité de son logement (106), dans lequel ledit moyen de détection comprend un détecteur de poids (117) sous chaque cartouche (105a - 105n, 106) en amont des réglages (109, 113) et un moyen de détection du flux (104, 118) dans le conduit (114) en aval des réglages en plus d'un détecteur d'opacité (119) et d'un détecteur de niveau (120) qui commande ledit mélange aromatisé (108) dans ladite cuve de mélange (107) et dans lequel ledit algorithme de gestion (133) commande tous lesdits moyens de dosage (103 - 127) en ajustant progressivement l'introduction de l'aromatisant sélectionné (104, 105a - 105n) et de l'eau (110, 129) dans ladite cuve de mélange (107, 108) en fonction des valeurs effectivement détectées par ledit moyen de détection (116 - 120) avec un dosage variable et étalonné (103 - 129) de l'aromatisant comme un auto-ajustement continu du dosage.

3. Système (10) pour la production de glace aromatisée selon la revendication 1 ou 2, **caractérisé en ce que** lesdits moyens de dosage comprennent une pompe péristaltique de type à débit étalonné avec une commande de la durée d'activation d'une précision égale à au moins une seconde.

4. Système (10) pour la production de glace aromatisée selon la revendication 1 ou 3, **caractérisé en ce que** lesdits moyens d'identification des aromatisants individuels sont des connexions mécaniques à détrompage dédiées entre le conteneur d'un aromatisant ou la cartouche (105a - 105n) et son logement (106).

5. Système (10) pour la production de glace aromatisée selon la revendication 2, **caractérisé en ce que** ledit moyen d'identification automatique (115) et le moyen de détection correspondant (116) procèdent à la reconnaissance d'un aromatisant et contrôlent aussi sa date d'expiration, ledit moyen d'identification (115, 116) pouvant être de type Code QR ou RFID.

6. Système (10) pour la production de glace aromatisée selon l'une quelconque des précédentes revendications, **caractérisé en ce que** ledit système est doté d'un moyen de nettoyage agissant sur l'évaporateur (102), au niveau des surfaces en contact avec la glace aromatisée (135).

7. Système (10) pour la production de glace aromatisée selon la revendication précédente, **caractérisé en ce que** lesdits moyens de nettoyage sont automatiques et intégrés, directement connectés à ladite unité logique (100) et commandés par un algorithme de nettoyage (134) inclus dans la même unité logique (100), avec des paramètres de commande modifiables pour exécuter un rinçage à l'eau et/ou un nettoyage à l'aide de détergents, dans lequel ledit algorithme de gestion (133) suspend temporairement le cycle de production pour démarrer un nettoyage automatique selon ledit algorithme de nettoyage (134).

8. Système (10) pour la production de glace aromatisée selon les revendications 6 et 7, **caractérisé en ce qu'au** moins l'une desdites cartouches (105a - 105n) contient un détergent.

9. Système (10) pour la production de glace aromatisée selon la revendication 2, **caractérisé en ce que** pour chaque cycle de production de glace aromatisée (135), ledit algorithme de gestion (100, 133) exécute ledit dosage variable et étalonné de l'aromatisant sélectionné (104, 105a - 105n, 115) selon les phases opérationnelles suivantes (F1 - F7) :
F1) il active un organe de réglage (109, 113) parmi ceux simultanément disponibles dans le système, de manière à minimiser l'interaction entre l'aromatisant utilisé (104, 105a - 105n) et les composants du système engagés dans le cycle de production, limitant ainsi les surfaces à nettoyer ;
F2) il contrôle potentiellement quels aromatisants (104, 105a - 105n) sont disponibles en amont desdits organes de réglage (109, 113) à l'aide des moyens d'identification automatique (115, 116) ;
F3) il contrôle la quantité disponible pour l'aromatisant souhaité (104) en amont desdits organes de dosage à l'aide du moyen de détection (117), qui détecte le poids résiduel de la cartouche correspondante (105a - 105n) ;
F4) il programme la quantité d'aromatisant (104) qui doit être introduite dans la cuve de mélange avec l'eau (107, 129) pour obtenir le mélange aromatisé (108) ;
F5) il distribue l'aromatisant et contrôle simultanément la quantité d'aromatisant (104) effectivement introduite dans l'eau (108) à l'aide d'au moins l'un des moyens de détection suivants en aval desdits organes de réglage (109, 113) : le détecteur de flux (118) ou le détecteur d'opacité (119) ou l'indicateur de niveau (120) ou une combinaison de ces moyens de détection ;
F6) il programme les intervalles périodiques selon lesquels intervient la production de glace aromatisée ;
F7) il programme la quantité définie, en poids, de glace aromatisée à produire dans un seul cycle de production avec un seul aromatisant.

10. Système (10) pour la production de glace aromatisée selon la revendication précédente, **caractérisé en ce que** dans les phases susmentionnées F3, F4 et F5, pour le dosage de chaque aromatisant sélectionné (104, 105a - 105n), l'algorithme de gestion (133) tient compte d'un premier groupe de paramètres modifiables (DA, DK, DD) en lien avec la quantité de dosage ou la concentration effective et d'un deuxième groupe de paramètres modifiables (RD, SD) en lien avec la gestion du dosage, lesdits paramètres du premier groupe étant : (DA) est la durée d'activation d'un organe de réglage (109, 113), (DK) est la quantité en poids (117) d'aromatisant distribué par une cartouche (104, 105a - 105n), (DD) est la densité du dosage effectivement réalisé (108, 119), dans lequel ledit algorithme de gestion (133) bloque l'introduction de l'aromatisant (104, 109, 113, DA) lorsqu'une valeur définie (DK, DA) est atteinte, et dans lequel lesdits paramètres du deuxième groupe sont : (RD) est le délai d'introduction d'un aromatisant par rapport au début d'un cycle de froid pour la production de glace (100, 101, 102, 135) et (SD) est le délai d'attente après l'introduction.

11. Système (10) pour la production de glace aromatisée selon l'une quelconque des précédentes revendications, **caractérisé en ce que** ledit revêtement de protection (132) est une couche d'une épaisseur comprise entre 1 micromètre et 120 micromètres de quartz ou équivalent, afin de réduire la rugosité de la surface grâce à un effet lissant et anti-accumulation.
